# FASCICULE DE BREVET EUROPEEN

(11) **EP 3 642 059 B1**
(45) Date de publication et mention de la délivrance du brevet: **28.04.2021**
(21) Numéro de dépôt: 18755506.5
(22) Date de dépôt: 21.06.2018
(51) Int. Cl.: B60D 1/48

(54) **VÉHICULE AUTOMOBILE ROUTIER ATTELABLE**
KOPPELBARES KRAFTFAHRZEUG-STRASSENFAHRZEUG
COUPLABLE AUTOMOTIVE ROAD VEHICLE

(30) Priorité: 23.06.2017 FR 1755803
(43) Date de publication de la demande: 29.04.2020
(73) Titulaire: Commissariat à l'Energie Atomique et aux Energies Alternatives, 75015 Paris (FR)
(72) Inventeur: CERVANTES, Valery, 38054 Grenoble Cedex 09 (FR); AZAIS, Philippe, 38054 Grenoble Cedex 09 (FR)
(74) Mandataire: Colombo, Michel
(86) Numéro de dépôt international: PCT/FR2018/051500
(87) Numéro de publication internationale: WO 2018/234702

(56) Documents cités:
- WO-A1-02/22429
- WO-A1-2017/037387
- US-A- 3 722 921

## Description

L'invention concerne un véhicule automobile routier attelable.

Des véhicules automobiles routiers attelables connus comportent :
- au moins trois roues aptes à faire rouler le véhicule automobile sur une route plane, réparties entre deux trains avant et arrière de roues ;
- un châssis, comportant :
   - une partie avant sur laquelle est fixée le train avant ;
   - une partie arrière sur laquelle est fixée le train arrière ;
   - une articulation interposée entre les parties avant et arrière du châssis, cette articulation permettant à la partie avant de pivoter, par rapport à la partie arrière, autour d'un axe d'articulation normal à un plan de roulement du véhicule, de manière à modifier un angle d'articulation du véhicule, ce plan de roulement étant défini comme étant le plan passant par les surfaces de contact entre la route et les roues du véhicule,
- des attelages avant et arrière, situés, respectivement, à l'avant et à l'arrière du véhicule automobile,
   - l'attelage avant étant déplaçable, en alternance, entre :
      - une position attelée, dans laquelle cet attelage avant coopère avec un attelage arrière, identique à l'attelage arrière de ce véhicule et situé sur un autre véhicule, pour attacher mécaniquement, sans degré de liberté en rotation en lacet, ces véhicules entre eux, et aligner la partie avant de ce véhicule avec la partie arrière de l'autre véhicule, et
      - une position dételée, dans laquelle ces véhicules sont détachés l'un de l'autre ;
   - l'attelage arrière étant déplaçable, en alternance, entre :
      - une position attelée, dans laquelle cet attelage arrière coopère avec un attelage avant, identique à l'attelage avant de ce véhicule et situé sur un autre véhicule, pour attacher mécaniquement, sans degré de liberté en rotation en lacet, ces véhicules entre eux et aligner la partie arrière de ce véhicule avec la partie avant de l'autre véhicule, et
      - une position dételée, dans laquelle ces véhicules sont détachés l'un de l'autre ;
- un dispositif de direction, apte à modifier, en réponse à une commande d'un conducteur du véhicule, l'angle de braquage de chaque roue du train avant, ce dispositif de direction étant indépendant de l'articulation,
- un mécanisme commandable de verrouillage apte à basculer, en alternance, entre :
   - une position verrouillée, dans laquelle il verrouille l'articulation dans une position où les parties avant et arrière du châssis du véhicule sont alignées l'une par rapport à l'autre, tant que l'attelage avant de ce véhicule est dételé, et
   - une position déverrouillée, dans laquelle les parties avant et arrière sont libres de pivoter, l'une par rapport à l'autre, en rotation autour de l'axe d'articulation, tant que l'attelage avant de ce véhicule est attelé,
      ce mécanisme comportant à cet effet un vérin interposé entre les parties avant et arrière, ce vérin comportant un cylindre et un piston monté coulissant à l'intérieur du cylindre le long d'un axe longitudinal, ce piston divisant le cylindre en une chambre avant et une chambre arrière chacune remplie d'un fluide d'actionnement.

Par exemple, de tels véhicules automobiles sont décrits dans les demandes WO2014135310 et WO2017037387.

Dans ces véhicules, le mécanisme commandable de verrouillage est nécessaire pour assurer une bonne tenue de route aussi bien lorsque le véhicule automobile est détaché de tout autre véhicule que lorsque ce véhicule est intégré à un convoi de véhicules attelés les uns derrière les autres.

Dans les véhicules connus, pour maintenir le mécanisme de verrouillage dans la position verrouillée ou dans la position déverrouillée, celui-ci doit être alimenté en permanence. Ainsi, en cas de panne d'alimentation du mécanisme de verrouillage, celui-ci n'est plus capable de maintenir sa position verrouillée ou sa position déverrouillée. Ceci pose de graves problèmes de sécurité.

Par exemple, lorsqu'un conducteur conduit le véhicule détaché de tout autre véhicule, la panne d'alimentation peut provoquer un basculement accidentel de la position verrouillée vers la position déverrouillée. L'articulation du véhicule est alors libérée en rotation, ce qui provoque une brusque diminution de la tenue de route du véhicule. Cela rend aussi le pilotage de ce véhicule beaucoup plus difficile car le pivotement de la partie avant du châssis par rapport à sa partie arrière modifie la direction dans laquelle roule le véhicule.

À l'inverse, lorsque le véhicule est intégré dans un convoi, la panne d'alimentation peut provoquer un basculement accidentel de la position déverrouillée vers la position verrouillée. Dans ce cas, dans les virages, les roues du véhicule attelé dérapent de façon incontrôlée, ce qui rend très difficile le pilotage de ce convoi.

De l'état de la technique est également connu de :
- WO02/22429A1, et
- US3722921A.

Il est donc souhaitable d'améliorer la sécurité de ce véhicule automobile routier attelable notamment en cas de panne de l'alimentation du mécanisme de verrouillage.

L'invention a donc pour objet un tel véhicule automobile routier attelable conforme à la revendication 1.

Dans le véhicule revendiqué, puisque les premier et second états du distributeur bistable sont stables, même en absence d'alimentation électrique, le mécanisme de verrouillage est capable de maintenir sa dernière position sans consommer d'énergie. Cette dernière position est soit la position verrouillée soit la position déverrouillée. Dès lors, si la panne d'alimentation survient alors que la partie avant du véhicule est dételée, le mécanisme de verrouillage reste et maintient quand même la position verrouillée de l'articulation. La tenue de route du véhicule n'est donc pas affectée par cette panne d'alimentation. Si la panne d'alimentation survient alors que la partie avant de ce véhicule est attelée, le mécanisme de verrouillage reste et maintient quand même la position déverrouillée. La tenue de route du convoi n'est donc pas non plus affectée par cette panne d'alimentation.

Les modes de réalisation de ce véhicule peuvent comporter une ou plusieurs des caractéristiques des revendications dépendantes.

L'invention sera mieux comprise à la lecture de la description qui va suivre, donnée uniquement à titre d'exemple non limitatif et faite en se référant aux dessins sur lesquels :
- la figure 1A est une illustration schématique d'un convoi automobile routier selon une vue latérale ;
- la figure 1B est une illustration schématique du convoi de la figure 1A selon une vue de dessus simplifiée ;
- la figure 2 est une illustration schématique d'un véhicule du convoi de la figure 1A ;
- la figure 3 est une illustration schématique d'un mécanisme de verrouillage du véhicule de la figure 2 ;
- la figure 4 est un organigramme d'un procédé de fonctionnement du mécanisme de la figure 3 ;
- la figure 5 est une illustration schématique d'un autre mode de réalisation possible d'un mécanisme de verrouillage pour le véhicule de la figure 2;
- la figure 6 est une illustration schématique, en vue de dessus, d'un distributeur bistable susceptible d'être utilisé dans le mécanisme de verrouillage de la figure 3 ou 5.

Dans ces figures, les mêmes références sont utilisées pour désigner les mêmes éléments. Dans la suite de cette description, les caractéristiques et fonctions bien connues de l'homme du métier ne sont pas décrites en détails.

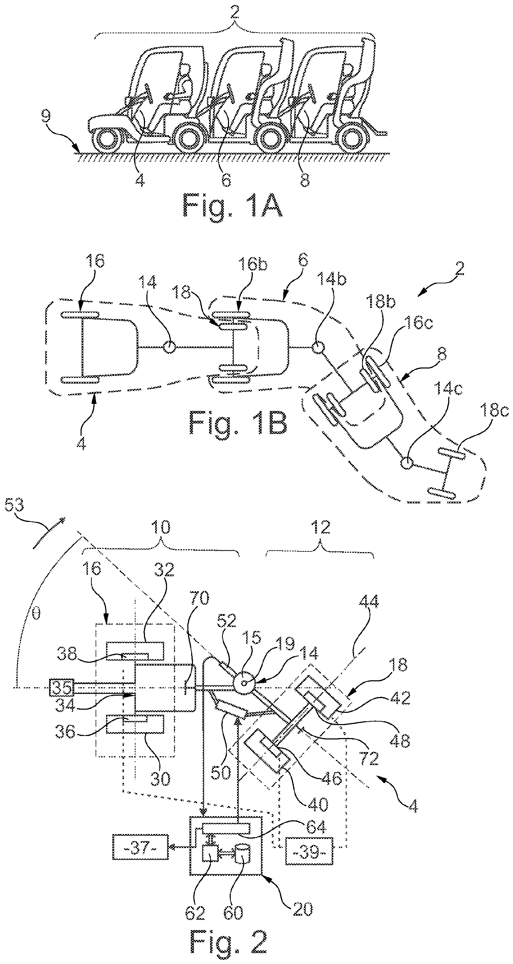

Les figures 1A et 1B représentent schématiquement un exemple d'un convoi 2 automobile routier. Ce convoi 2 comporte :
- un véhicule 4 situé en tête du convoi 2, et
- une pluralité de véhicules, dits véhicules suiveurs, attelés deux à deux l'un derrière l'autre à l'arrière du véhicule 4. L'un de ces véhicules suiveurs est attelé directement à l'arrière du véhicule 4.

Le convoi 2 et le véhicule 4 sont similaires à ceux décrits dans les demandes WO2014135310 et WO2017037387. Ainsi, par la suite, seuls les détails techniques nécessaires à la compréhension de l'invention sont décrits en détail.

Pour simplifier, le convoi 2 ne comporte que trois véhicules : le véhicule 4 et deux véhicules suiveurs attelés l'un derrière l'autre et à l'arrière du véhicule 4. Ces véhicules suiveurs portent les références, respectivement, 6 et 8 sur les figures 1A et 1B. Les véhicules 6 et 8 sont ici identiques au véhicule 4. Aussi, seul ce dernier est décrit en détail.

Le convoi 2 se déplace le long d'un plan de roulement 9. Le plan 9 est défini comme étant le plan passant par les surfaces de contact entre les roues du véhicule 4 et la route sur laquelle circule ce véhicule. Le plan 9 est ici horizontal.

La figure 2 représente plus en détail le véhicule 4. Le véhicule 4 comporte ici :
- un châssis comportant des parties de châssis avant 10 et arrière 12 ;
- une articulation 14 entre les parties 10 et 12 ;
- uniquement deux trains de roues avant 16 et arrière 18 fixés, respectivement, sur les parties 10 et 12 ;
- un dispositif 20 de commande de l'articulation 14.

Sur la figure 2, le dispositif 20 et différents autres organes de commande sont représentés, pour améliorer la lisibilité de la figure, comme étant déportés sur un côté du véhicule 4. Toutefois, dans la réalité, il n'en est rien et le dispositif 20 comme tous les autres organes de commande sont logés à l'intérieur du véhicule 4.

Le train 16 comporte une roue gauche 30 et une roue droite 32, alignées l'une par rapport à l'autre autour d'un axe transversal 34. Les roues 30 et 32 sont aptes à se mouvoir en rotation autour d'un axe de rotation de cette roue. Les roues 30 et 32 sont généralement alignées perpendiculairement à l'axe 34 lorsqu'elles ne sont pas braquées. Leurs axes de rotation respectifs sont dans ce cas alignés avec cet axe 34. L'axe 34 est ici solidaire sans degré de liberté de la partie 10.

La partie 10 comporte un dispositif 35 de braquage (« steering » en langue anglaise) des roues 30 et 32. Ce dispositif de braquage est commandable par un conducteur du véhicule 4 pour modifier un angle de braquage ϕ des roues 30 et 32 afin de diriger le véhicule 4. Par exemple, ce dispositif de braquage est l'un de ceux décrits dans la demande WO2014135310 et, par exemple, celui décrit en référence à la figure 10 de la demande WO2014135310.

L'angle de braquage ϕ est ici défini comme étant l'angle aigu entre le plan vertical perpendiculaire à l'axe de roulement de cette roue et le plan vertical qui contient un axe longitudinal de la partie 10. Il y a donc un angle ϕ pour chaque roue.

On définit l'axe longitudinal de la partie 10 comme étant un axe solidaire sans degré de liberté de la partie 10 et qui est aligné avec l'axe longitudinal du véhicule 4 lorsque les parties 10 et 12 sont alignées entre elles et que les roues 30, 32 ne sont pas braquées. L'axe longitudinal de la partie 10 est ici un axe parallèle au plan 9 de roulement, perpendiculaire à l'axe 34 et qui passe par le centre géométrique de cet axe 34. Le centre géométrique de l'axe 34 est ici situé à équidistance des centres respectifs des roues 30, 32. L'axe de rotation respectif de chacune de ces roues 30, 32 passe par le centre de cette roue.

Chaque roue 30, 32 comporte une machine électrique commandable apte à fonctionner en tant que moteur et, en alternance, en tant que génératrice. Lorsqu'elle fonctionne en tant que moteur, elle entraîne cette roue en rotation pour propulser le véhicule 4. Les machines des roues 30 et 32 portent respectivement les références 36 et 38. Par exemple, les machines 36 et 38 sont identiques à celles décrites dans la demandes WO2017037387.

Les machines 36, 38 sont raccordées à un circuit de commande 37 du véhicule 4 qui commande le fonctionnement de ces machines indépendamment l'une de l'autre.

Chacune des machines 36, 38 est ici également raccordé électriquement à un circuit de puissance 39 du véhicule 4 apte à fournir de l'énergie électrique pour alimenter cette machine. Ce circuit 39 comporte par exemple un dispositif de stockage d'énergie électrique, tel qu'une batterie d'accumulateurs électriques rechargeables.

Avantageusement, le train 16 comporte également des freins mécaniques commandables pour freiner les roues 30 et 32. Ces freins mécaniques exercent, lorsqu'ils sont commandés à cette fin, par exemple par un conducteur du véhicule 4, un freinage dissipatif sur une roue en dissipant sous forme d'énergie thermique au moins une partie de l'énergie cinétique de rotation de cette roue. Par exemple, il s'agit de freins à tambour ou de freins à mâchoire ou de freins à disques.

Le train 18 comporte des roues gauche 40 et droite 42 alignées sur un axe transversal 44. Le train 18 est ici identique au train 16, sauf que les roues 40 et 42 ne peuvent pas être braquées. Les machines électriques des roues 40 et 42 portent respectivement les références 46 et 48. Les machines 46 et 48 sont également raccordées aux circuits 37 et 39.

L'articulation 14 autorise un déplacement en rotation des parties 10 et 12 l'une par rapport à l'autre autour d'un axe 19 de rotation perpendiculaire au plan 9. Ici, l'axe 19 est vertical. Par exemple, l'articulation 14 comporte une liaison pivot 15 raccordant mécaniquement les parties 10 et 12 et présentant comme axe de rotation l'axe 19. Par exemple, l'articulation 14 est celle décrite dans la demande internationale WO2014135310.

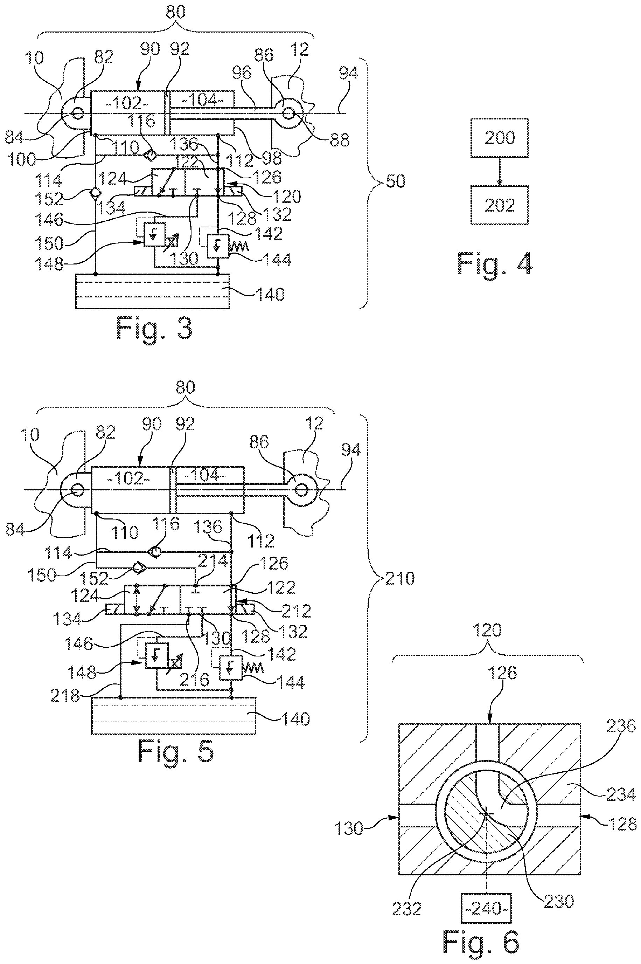

Le véhicule 4 comporte un mécanisme 50 commandable de verrouillage de l'articulation 14. Ce mécanisme est décrit plus en détail en référence à la figure 3.

Ici, le véhicule 4 comporte aussi un capteur 52 d'angle qui est apte à mesurer l'angle d'articulation, noté θ, entre les parties 10 et 12. Par exemple, cet angle θ est défini comme le plus petit angle orienté, mesuré dans un plan parallèle au plan 9, entre les axes longitudinaux des parties 10 et 12. Le sens positif d'orientation de cet angle θ est ici illustré par la flèche 53. Sur l'exemple de la figure 2, l'angle θ présente donc une valeur positive. Ce capteur 52 est ici raccordé à une interface de collecte de données du dispositif 20.

Le dispositif 20 comporte :
- un support 60 d'enregistrement d'informations ;
- un microprocesseur 62 électronique programmable tel qu'un microprocesseur de la famille 8086 de la société INTEL®;
- une interface 64 d'échange de données.

Le dispositif 20 est programmé pour, lorsqu'il détecte que le véhicule 4 est en tête du convoi 2, commander le mécanisme 50 pour qu'il bascule et reste dans une position verrouillée, et, en parallèle, laisser le conducteur du véhicule 4 libre d'actionner le dispositif 35 de braquage de ce véhicule 4. Dans la position verrouillée, le mécanisme 50 bloque l'articulation 14 sur un angle θ égal à 0°. Éventuellement, avant de basculer le mécanisme 50 dans sa position verrouillée, le dispositif 20 commande les machines électriques des roues pour obtenir un angle θ égal à 0°. Les parties 10 et 12 sont alors alignées l'une avec l'autre longitudinalement et ne peuvent pas pivoter l'une par rapport à l'autre autour de l'axe 19. Au contraire, si le dispositif 20 détecte que le véhicule auquel il appartient n'est pas en tête du convoi, alors il commande le mécanisme 50 pour basculer et rester dans une position déverrouillée. Dans la position déverrouillée, le mécanisme 50 ne bloque pas l'articulation 14 et laisse cette articulation libre de tourner autour de l'axe 19.

Dans ce mode de réalisation particulier, le dispositif 20 est également programmé pour amortir les oscillations de l'angle θ autour d'une consigne θ₀ d'angle d'articulation grâce aux données fournies par le capteur 52. En réponse, le dispositif 20 commande le mécanisme 50 et les machines 36, 38, 46, 48 pour exercer sur l'articulation 14 un moment en opposition par rapport aux oscillations mesurées. Cet aspect du fonctionnement du véhicule 4 est décrit en détail dans la demande WO2017037387. Ainsi, pour plus de détail sur ce point, le lecteur est renvoyé à cette demande.

Enfin, le véhicule 4 comporte des attelages avant et arrière 70 et 72. Chaque attelage 70, 72 est déplaçable, en alternance, entre des positions attelée et dételée, par exemple en réponse à un signal de commande d'un conducteur du convoi 2. L'attelage 70 est apte à coopérer avec un attelage arrière, par exemple identique à l'attelage 72, installé à l'arrière d'un autre véhicule. Dans la position attelée, l'attelage 70 est attaché mécaniquement, sans degré de liberté en rotation en lacet, à l'attelage 72 de l'autre véhicule. Dans la position attelée la partie avant 10 du véhicule 4 est alignée avec la partie arrière 12 de l'autre véhicule. Par rotation en lacet, on désigne ici un mouvement de rotation uniquement autour d'un axe perpendiculaire au plan 9. A cet effet, les attelages 70 et 72 présentent des formes complémentaires l'une avec l'autre. Ici, les attelages 70 et 72 sont ancrés respectivement aux parties 10 et 12 sans degré de liberté en rotation en lacet. Par exemple, les attelages 70 et 72 sont ceux décrits dans la demande internationale WO2014135310.

La figure 3 représente un premier exemple de réalisation du mécanisme 50. Le mécanisme 50 comporte un vérin hydraulique 80. Une extrémité avant 82 du vérin 80 est reliée mécaniquement à la partie 10, par exemple, par l'intermédiaire d'une liaison pivot 84 qui permet seulement une rotation autour d'un axe parallèle à l'axe 19. De façon similaire, une extrémité arrière 86 du vérin 80 est reliée à la partie 12 par une liaison pivot 88. Ici, le vérin 80 est capable de verrouiller l'articulation 14 et de freiner la rotation l'une par rapport à l'autre des parties 10 et 12 autour de l'axe 19. En particulier, dans ce mode de réalisation, le vérin 80 est apte à exercer un moment de freinage réglable, autour de l'axe 19, en réponse à un signal de commande émis par le dispositif 20. Par contre, le vérin 80 est incapable de déplacer les parties 10 et 12 l'une par rapport à l'autre.

Le vérin 80 comporte un cylindre hermétique 90 à l'intérieur duquel coulisse un piston 92 le long d'un axe longitudinal rectiligne 94. Le piston 92 est fixé sans aucun degré de liberté à une extrémité avant d'une tige rigide 96. La tige 96 se prolonge le long de l'axe 94 à travers une face arrière 98 du cylindre 90 jusqu'à l'extrémité 86. L'extrémité 86 correspond à l'extrémité arrière de la tige 96. Une face avant 100 du cylindre 90 est fixée sans aucun degré de liberté à l'extrémité 82.

Par la suite, lorsque le piston 92 se rapproche de face avant 100, on dit que le piston 92 avance ou se déplace en avançant. Lorsque le piston 92 se rapproche de la face arrière 98, on dit que le piston 92 recule ou se déplace en reculant ou en arrière.

Le piston 92 divise le cylindre 90 en deux chambres, à savoir une chambre avant 102 et une chambre arrière 104. Seule la chambre 104 est traversée par la tige 96. À cause de cela, la section transversale S₁₀₄ de la chambre 104 est plus petite que la section transversale S₁₀₂ de la chambre 102. Par exemple, la section S₁₀₄ est inférieure ou égale à 0,95S₁₀₂ ou 0,9S₁₀₂ ou 0,8S₁₀₂. Généralement, la section S₁₀₄ est supérieure ou égale à 0,5S₁₀₂. La section transversale est ici la section de la chambre perpendiculaire à l'axe 94.

Le vérin 80 comporte un orifice avant 110 d'admission et, en alternance, de refoulement d'un fluide d'actionnement à l'intérieur de la chambre 102. L'orifice 110 est typiquement situé à proximité de la face avant 100 ou sur cette face avant 100. Le vérin 80 comporte aussi un orifice arrière 112 d'admission et, en alternance, de refoulement du fluide d'actionnement à l'intérieur de la chambre 104. L'orifice 112 est typiquement situé à proximité de la face arrière 98 ou sur cette face arrière 98. Le fluide d'actionnement est ici un fluide incompressible tel qu'un liquide. Le fluide d'actionnement est par exemple de l'huile.

Par la suite, lorsque le terme « raccordé » est utilisé, il désigne, sauf indication contraire, le fait de raccorder fluidiquement entre eux deux éléments du mécanisme 50. De plus, pour simplifier les figures, les tuyaux sont représentés par de simples traits.

L'orifice 110 est directement raccordé à l'orifice 112 par un tuyau 114 équipé d'un clapet anti-retour 116. Le clapet 116 autorise uniquement la circulation du fluide d'actionnement à travers le tuyau 114 de la chambre 102 vers la chambre 104.

Le mécanisme 50 comporte un distributeur bistable 120 déplaçable, en réponse à une commande électrique émise par le dispositif 20, entre un premier et un second état stable, respectivement, 122 et 124. Les états 122 et 124 sont qualifiés de stables car une fois que le distributeur 120 a été déplacé dans l'un de ces états, le distributeur se maintient dans cet état stable sans apport d'énergie extérieur et, en particulier, sans qu'il y ait besoin de recevoir de l'énergie électrique et en absence de toute nouvelle commande de la part du dispositif 20. Ici, le distributeur 120 comporte seulement ces deux états stables.

Ici, dans l'état 122, le coulissement du piston 92 est interdit, ce qui empêche toute rotation des parties 10 et 12 du châssis, l'une par rapport à l'autre autour de l'axe 19. L'état 122 correspond donc à la position verrouillée du mécanisme 50. Pour cela, dans l'état 122, le distributeur 120 interdit la circulation du fluide d'actionnement entre les chambres 102 et 104.

À l'inverse, dans l'état 124, le piston 92 est libre de coulisser dans les deux sens, à l'intérieur du cylindre 90. L'état 124 correspond donc à la position déverrouillée du mécanisme 50. Pour cela, le distributeur 120 autorise la circulation du fluide d'actionnement dans les deux sens, entre les chambres 102 et 104.

Ici, le distributeur 120 comporte une entrée 126 et deux sorties 128 et 130. Il s'agit donc d'un distributeur bistable connu sous l'expression de « distributeur bistable 3/2 », c'est-à-dire un distributeur à trois voies et à seulement deux états stables. De nombreux modes de réalisation d'un tel distributeur sont connus. Par exemple, on retrouve l'utilisation d'un tel distributeur bistable 3/2 dans la demande US5419236.

Par exemple, de nombreux modes de réalisation d'un tel distributeur 120 sont obtenus en faisant coulisser un tiroir pour passer de façon réversible d'un état stable à l'autre.

Ici, le basculement entre les états 122 et 124 est commandé par deux actionneurs électriques 132 et 134 tels que des solénoïdes. Lorsque l'actionneur 132 est alimenté, le tiroir se déplace pour atteindre l'état 122 puis reste, même en absence d'alimentation, dans cet état. Lorsque l'actionneur 134 est alimenté, le tiroir se déplace pour atteindre l'état 124 puis reste, même en absence d'alimentation, dans cet état.

Dans l'état 122, l'entrée 126 est en permanence raccordée à la sortie 128 et en permanence fluidiquement isolée de la sortie 130. Dans l'état 124, l'entrée 126 est en permanence raccordée à la sortie 130 et fluidiquement isolée de la sortie 128.

L'entrée 126 est directement raccordée à l'orifice 112 par l'intermédiaire d'un tuyau 136.

La sortie 128 est raccordée à un réservoir 140 par l'intermédiaire d'un tuyau 142 équipé d'une soupape 144 de décharge. La soupape 144 raccorde automatiquement la sortie 128 au réservoir 140 uniquement si la pression du fluide d'actionnement à l'intérieur du tuyau 142 dépasse un seuil prédéterminé S₁. La valeur du seuil S₁ est strictement supérieure aux pressions du fluide d'actionnement qui peuvent être relevées dans des conditions normales de fonctionnement du mécanisme 50. Ainsi, dans des conditions normales de fonctionnement, la sortie 128 est fluidiquement isolée du réservoir 140. Ici, la valeur du seuil S₁ est aussi fixée pour que le fluide d'actionnement puisse traverser la soupape 142 avant que la pression de ce fluide n'atteigne une valeur telle que des éléments du mécanisme 50 soient irréversiblement endommagés ou dégradés. Ainsi, la soupape 142 est ici un organe de sécurité qui empêche d'atteindre une pression du fluide d'actionnement susceptible d'endommager de façon irréversible le mécanisme 50.

La sortie 130 est raccordée au réservoir 140 par l'intermédiaire d'un tuyau 146 équipé d'un réducteur commandable 148 de débit variable. Typiquement, le réducteur 148 règle une section hydraulique minimale disponible pour faire circuler le fluide d'actionnement dans le tuyau 146. Plus la section hydraulique minimale est petite, plus les pertes de charges sont importantes et plus le coefficient d'amortissement du vérin 80 est important. Le réducteur 148 est commandé, par le dispositif 20, lorsque le distributeur 120 est dans l'état 124 pour amortir les oscillations de l'angle θ. Un tel procédé de commande du réducteur 148 est décrit dans la demande WO2017037387. Par exemple, le réducteur 148 comporte à cet effet au moins une vanne de pression proportionnelle (« proportional pressure relief valve » en anglais).

Le volume du réservoir 140 est supérieur ou égal à Vₘₐₓ₁₀₂ - Vₘₐₓ₁₀₄, où Vₘₐₓ₁₀₂ et Vₘₐₓ₁₀₄ sont les volumes maximum respectivement des chambres 102 et 104.

Enfin, le mécanisme 50 comporte un tuyau 150 qui raccorde directement l'orifice 110 au réservoir 140 par l'intermédiaire d'un clapet anti-retour 152. Le clapet 152 permet uniquement la circulation du fluide d'actionnement depuis le réservoir 140 vers la chambre 102.

Le fonctionnement du mécanisme 100 lorsque le dispositif 120 est dans l'état 124 est le suivant. Lorsque le piston 92 avance, un volume V₁₀₂ de fluide d'actionnement est refoulé par l'orifice 110 et, simultanément, un volume V₁₀₄ doit être admis à l'intérieur de la chambre 104 par l'intermédiaire de l'orifice 112. Le fluide d'actionnement refoulé de la chambre 102 circule alors à travers le tuyau 114 et le clapet 116. Par contre, le clapet 152 empêche la circulation du fluide d'actionnement à travers le tuyau 150. Ainsi, le fluide d'actionnement refoulé de la chambre 102 ne peut pas atteindre le réservoir 140 sans passer par le distributeur 120.

Étant donné que le volume V₁₀₂ refoulé de la chambre 102 est strictement supérieur au volume V₁₀₄ qui doit être admis simultanément à l'intérieur de la chambre 104, une partie de ce volume V₁₀₂ est dirigée vers l'entrée 126. Cette partie du volume V₁₀₂ traverse le réducteur 148 avant d'être stockée dans le réservoir 140. Ainsi, l'avancement du piston 92 se fait à l'encontre d'une force de résistance dont la valeur peut être réglée en commandant le réducteur 148.

Lorsque le piston 92 recule, un volume V₁₀₄ est refoulé de la chambre 104 par l'intermédiaire de l'orifice 112. Simultanément, un volume V₁₀₂ doit être admis à l'intérieur de la chambre 102 par l'intermédiaire de l'orifice 110. Dans ce cas, la totalité du volume V₁₀₄ traverse le distributeur 120 et le réducteur 148 avant d'atteindre le réservoir 140. En effet, le clapet 116 empêche la circulation du fluide d'actionnement dans le tuyau 114 en allant de la chambre 104 vers la chambre 102. Ainsi, dans l'état 124, le même réducteur 148 permet d'ajuster le coefficient d'amortissement du vérin et cela quel que soit le sens de déplacement du piston 92. Le volume V₁₀₂ nécessaire pour remplir la chambre 102 est directement puisé dans le réservoir 140 puis traverse le tuyau 150 et le clapet 152.

Lorsque le distributeur 120 est dans l'état 122, le piston 92 est immobilisé tant que la pression du fluide d'actionnement reste inférieure au seuil S₁. En effet, dans cet état, l'excédant du volume V₁₀₂ ne peut pas traverser la soupape 144, ce qui bloque l'avancée du piston 92. De façon similaire, si le piston 92 essaie de reculer, le volume refoulé de la chambre 104 ne peut pas traverser la soupape 144, ce qui bloque tout mouvement de recul du piston 92.

Par contre, si des forces anormalement élevées sont exercées sur les extrémités 82 et 86 du vérin 80, de sorte que la pression du fluide d'actionnement dépasse le seuil S₁, alors la soupape 144 autorise la circulation du fluide d'actionnement vers le réservoir 140. Cela permet de limiter ou de maintenir la pression du fluide d'actionnement en dessous d'une limite, au-delà de laquelle le mécanisme 50 risque d'être endommagé.

Un exemple de fonctionnement du convoi 2 va maintenant être décrit, en référence à l'ordinogramme de la figure 4 et à l'aide des figures 1 et 2. Dans ce qui suit, pour faire référence aux éléments du véhicule 6, on utilise la même référence numérique que pour l'élément correspondant du véhicule 4 à laquelle on rajoute le suffixe « b ». Par exemple, l'articulation 14 du véhicule 6 porte la référence 14b. On procède de même pour le véhicule 8 avec le suffixe « c ».

Tout d'abord, lors d'une étape 200, le convoi 2 est formé en attachant les véhicules 4, 6 et 8 au moyen de leurs attelages 70 et 72 respectifs.

Le dispositif 20 du véhicule 4 détecte que ce véhicule est en tête du convoi 2 ou qu'il est détaché de tout autre véhicule. Il commande alors de mécanisme 50 pour le faire basculer dans sa position verrouillée. Pour cela, le dispositif 20 commande le distributeur 120 pour le déplacer dans l'état 122. Comme déjà indiqué précédemment, si nécessaire, avant de faire basculer le mécanisme 50 dans sa position verrouillée, le dispositif 20 commande, par exemple, une ou plusieurs des machines électriques 36, 38, 46 et 48 pour aligner les parties 10 et 12 et ainsi annuler l'angle θ. Dès lors, l'articulation 14 est bloquée dans la position où les axes longitudinaux de ses parties 10 et 12 sont alignés. Dans la position verrouillée, le conducteur peut braquer les roues 30, 32 à l'aide du dispositif 35.

Les dispositifs 20b et 20c détectent que les véhicules, respectivement, 6 et 8, ne sont pas en tête du convoi 2. Les dispositifs 20b et 20c commandent alors, respectivement, les mécanismes 50b et 50c pour qu'ils basculent dans leur position déverrouillée. Pour cela, les dispositifs 20b et 20c commandent, respectivement, les distributeurs 120b et 120c pour les déplacer dans l'état 124. Dès lors, les articulations 14b et 14c sont libres de pivoter autour de l'axe 19. De plus, les dispositifs 20b et 20c inhibent l'actionnement des dispositifs 35b et 35c de braquage des véhicules 6 et 8 par un conducteur de ces véhicules. Typiquement, l'angle de braquage des roues 30b, 32b, 30c et 32c est bloqué dans une position où l'axe de roulement de chacune de ces roues est parallèle à l'axe 34b ou 34c. Dans un autre mode de réalisation, l'angle de braquage des roues 30b, 32b, 30c et 32c est seulement limité, par exemple, de manière à atténuer un mouvement de louvoiement du convoi 2.

Ensuite, lors d'une étape 202, le convoi 2 est mis en mouvement et se déplace sur le plan 9, par exemple en ligne droite. Ici, le circuit 39 alimente les machines 36, 38, 46 et 48 pour fournir un couple destiné à mettre en rotation les roues 30, 32, 40 et 42 autour de leurs axes de rotation respectifs à une vitesse prédéterminée et dans un même sens. Il en va de même pour les véhicules 6 et 8.

Lors de ce déplacement du convoi 2, les dispositifs 20b et 20c commandent les machines électriques des roues pour amortir ou éliminer le mouvement de louvoiement qui pourrait apparaître. Pour cela, le procédé décrit dans la demande WO2017037387 est mis en œuvre.

La figure 5 représente un mécanisme 210 commandable de verrouillage susceptible d'être utilisé à la place du mécanisme 50. Le mécanisme 210 est identique au mécanisme 50 sauf que le distributeur bistable 120 est remplacé par un distributeur bistable 212. Le distributeur 212 est identique au distributeur 120 sauf qu'il comporte en plus de l'entrée 126 et des sorties 128 et 130, une entrée 214 et une sortie 216. Dans l'état 122, l'entrée 214 est en permanence fluidiquement isolée des sorties 128, 130 et 216. Dans l'état 124, l'entrée 214 est raccordée en permanence seulement à la sortie 216.

Dans ce mode de réalisation, l'extrémité du tuyau 150 qui, dans le mécanisme 50 est raccordée directement au réservoir 140, est maintenant raccordée directement à l'entrée 214. La sortie 216 est directement raccordée par l'intermédiaire d'un tuyau 218 au réservoir 140.

Le fonctionnement du mécanisme 210 se déduit des explications données pour le mécanisme 50. Dans la position déverrouillée, lorsque le piston 92 recule, le fluide d'actionnement admis dans la chambre 102 traverse le distributeur 212.

La figure 6 représente un mode de réalisation particulier du distributeur 120. Dans ce mode de réalisation, le distributeur est réalisé à l'aide d'une vanne à boisseau motorisée. Cette vanne comporte une pièce mobile 230 souvent appelée « bille ». La pièce 230 est déplaçable en rotation au moins autour d'un axe 232 à l'intérieur d'un châssis fixe 234 entre une première position représentée sur la figure 6 et une seconde position.

La pièce 230 comporte un canal 236 qui raccorde l'entrée 126 à la sortie 128 dans la première position et qui raccorde l'entrée 126 à la sortie 130 dans la seconde position. Les première et seconde positions correspondent donc, respectivement, aux premier et second états stables du distributeur 120.

Le déplacement de la pièce 230 entre ses première et seconde positions est réalisé par un actionneur 240 commandable. Cet actionneur 240 est apte en réponse à une commande du dispositif 20 à déplacer la pièce 230 de sa première vers sa seconde position et, en alternance, de la seconde position vers la première position.

### Variantes du véhicule 4 :

Les véhicules 4, 6 et 8 peuvent être différents les uns des autres.

Le dispositif de braquage des roues 30 et 32 peut être différent. Il peut s'agir d'un dispositif de direction de type Ackermann (« Ackermann steering » en langue anglaise).

Le nombre de roues portées par les trains 16 et 18 peut être différent. Par exemple, le train 16 comporte deux roues gauche et deux roues droite, jumelées par paire. Dans des modes de réalisation où le freinage différentielle des roues n'est pas mis en œuvre, l'un des trains 16 et 18 peut comporter qu'une seule roue.

Les freins mécaniques peuvent être omis.

Le capteur 52 peut aussi être omis si le procédé pour limiter ou annuler le louvoiement du convoi 2 n'est pas mis en œuvre.

En variante, l'articulation 14 peut être réalisée autrement qu'à l'aide d'une liaison pivot. Par exemple, l'articulation 14 est remplacée par l'articulation de la figure 17 de la demande WO2014135310.

En variante, le véhicule 4 comporte uniquement deux machines électriques. Par exemple, pour cela, les machines 36, 38 ou les machines 46, 48 sont omises. Dans une autre variante, les machines électriques du véhicule 4 sont omises. Dans ce cas, le véhicule 4 est équipé d'un autre moyen de propulsion tel qu'un moteur thermique à combustion de carburant.

### Variantes du mécanisme de verrouillage :

Les différentes caractéristiques du véhicule 4 relatives à l'amortissement des oscillations de l'angle θ peuvent être omises. Dans ce cas, le réducteur 148 peut être omis ou remplacé par un réducteur non commandable. Par exemple, le réducteur 148 est remplacé par un réducteur dont la section hydraulique minimale est constante et ne peut pas être modifiée.

Le réducteur 148 peut aussi être placé ailleurs dans le mécanisme commandable de verrouillage. Par exemple, dans le mécanisme 210, le réducteur 148 peut être placé sur le tuyau 218.

Dans un mode de réalisation simplifié, la soupape 144 de décharge est omise. Dans ce cas, dans le premier état stable du distributeur 120 ou 212, l'entrée 126 et la sortie 128 sont fluidiquement isolées l'une de l'autre de manière à empêcher la circulation du fluide d'actionnement de l'entrée 126 jusqu'au réservoir 140.

Le distributeur 120 ou 212 peut être remplacé par un distributeur bistable identique mais à commande pneumatique, à la place de la commande électrique.

Le mécanisme 50 ou 210 a été décrit dans le cas particulier où il comporte un seul vérin hydraulique. Toutefois, en variante, il peut comporter deux vérins hydrauliques distincts, chacun mécaniquement raccordé entre les parties 10 et 12 du châssis du véhicule 4. Dans ce cas, chaque vérin peut être associé à son propre exemplaire du mécanisme 50 ou 210, chacun de ces exemplaires étant indépendant l'un de l'autre. Il est aussi possible de prévoir qu'un seul et même mécanisme commandable de verrouillage est utilisé pour bloquer ou libérer ces deux vérins. Dans ce dernier cas, ce mécanisme utilise pour cela un seul ou deux distributeurs bistables communs à ces deux vérins.

En variante, le tuyau 150 est directement raccordé à un autre orifice que l'orifice 110 débouchant dans la chambre 102.

L'entrée 126 du distributeur 120 peut être directement raccordée à l'orifice 112 ou à un autre orifice, distinct de l'orifice 112, qui débouche directement à l'intérieur de la chambre 104.

Le clapet 152 peut être omis dans le mécanisme 210.

### Avantages des différents modes de réalisation :

Grâce au tuyau 114, dans la position déverrouillée, une partie seulement du fluide d'actionnement refoulé de la chambre 102 traverse le distributeur 120. Dès lors, le distributeur 120 peut interdire l'avancée du piston 92 en bloquant seulement la circulation d'une partie du fluide d'actionnement refoulé de la chambre 102. Cela facilite la miniaturisation du distributeur 120 ou 212.

Le clapet 116 et le raccordement de la chambre 104 à la même entrée 126 du distributeur permettent de bloquer simplement le déplacement du piston 92 vers l'arrière. En effet, pour cela, le même état 122 du distributeur 120 ou 212 est utilisé.

Placer la soupape 144 entre la sortie 128 et le réservoir 140 permet à l'aide de la même soupape 144 de protéger, dans l'état 122, le mécanisme 50 contre une surpression due à un brusque déplacement vers l'avant ou vers l'arrière du piston 92.

La présence du réducteur 148 entre la sortie 130 et le réservoir 140 permet de commander le coefficient d'amortissement du vérin dans l'état 124 en agissant seulement sur une partie du fluide d'actionnement qui circule entre les chambres 102 et 104. Cela facilite la miniaturisation du distributeur et du réducteur 148.

Le fait de faire passer deux fois le fluide d'actionnement dans le distributeur 212 permet d'augmenter la stabilité de l'état 122. En effet, contrairement au mode de réalisation de la figure 3, si l'on tire sur le piston 92 vers la droite, le distributeur 212 bloque à la fois l'admission de fluide dans la chambre 102 et le refoulement du fluide depuis la chambre 104. Cela limite aussi l'usure du distributeur bi-stable.

Le tuyau 150 permet, dans l'état 124, d'autoriser le remplissage de la chambre 102 directement à partir du réservoir 140. Ceci permet le déplacement du piston 92 vers l'arrière dans l'état 124.

La position équidistante de l'axe instantané de rotation de l'articulation 14 par rapport aux axes transversaux 34, 44 permet à chacun des véhicules du convoi 2 de suivre exactement les mêmes traces que celles du véhicule 4 en tête de ce convoi. Typiquement, dans ce cas, on parle de convoi « monotrace ».

C'est surtout parce que le véhicule 4 comporte seulement les deux trains 16 et 18 que sa stabilité est extrêmement dégradée en cas de dysfonctionnement du mécanisme 50. Si le véhicule 4 comportait plus de deux trains de roues alors sa stabilité ne serait pratiquement pas affectée par une défaillance du mécanisme 50.

## Revendications

1. Véhicule automobile (4 ; 6 ; 8) routier attelable, comprenant :
- au moins trois roues (30, 32, 40, 42), aptes à faire rouler le véhicule automobile sur une route plane, réparties entre deux trains avant (16) et arrière (18) de roues ;
- un châssis, comportant :
• une partie avant (10) sur laquelle est fixée le train avant ;
• une partie arrière (12) sur laquelle est fixée le train arrière ;
• une articulation (14) interposée entre les parties avant et arrière du châssis, cette articulation permettant à la partie avant de pivoter, par rapport à la partie arrière, autour d'un axe (19) d'articulation normal à un plan de roulement du véhicule, de manière à modifier un angle d'articulation (θ) du véhicule, ce plan de roulement étant défini comme étant le plan passant par les surfaces de contact entre la route et les roues du véhicule,
- des attelages avant (70) et arrière (72), situés, respectivement, à l'avant et à l'arrière du véhicule automobile,
• l'attelage avant (70) étant déplaçable, en alternance, entre :
- une position attelée, dans laquelle cet attelage avant coopère avec un attelage arrière, identique à l'attelage arrière (72) de ce véhicule et situé sur un autre véhicule, pour attacher mécaniquement, sans degré de liberté en rotation en lacet, ces véhicules entre eux, et aligner la partie avant de ce véhicule avec la partie arrière de l'autre véhicule, et
- une position dételée, dans laquelle ces véhicules sont détachés l'un de l'autre ;
• l'attelage arrière (72) étant déplaçable, en alternance, entre :
- une position attelée, dans laquelle cet attelage arrière coopère avec un attelage avant, identique à l'attelage avant (70) de ce véhicule et situé sur un autre véhicule, pour attacher mécaniquement, sans degré de liberté en rotation en lacet, ces véhicules entre eux et aligner la partie arrière de ce véhicule avec la partie avant de l'autre véhicule, et
- une position dételée, dans laquelle ces véhicules sont détachés l'un de l'autre ;
- un dispositif de direction (35), apte à modifier, en réponse à une commande d'un conducteur du véhicule, l'angle de braquage de chaque roue du train avant, ce dispositif de direction étant indépendant de l'articulation (14),
- un mécanisme (50 ; 210) commandable de verrouillage apte à basculer, en alternance, entre :
• une position verrouillée, dans laquelle il verrouille l'articulation dans une position où les parties avant et arrière du châssis du véhicule sont alignées l'une par rapport à l'autre, tant que l'attelage avant de ce véhicule est dételé, et
• une position déverrouillée, dans laquelle les parties avant et arrière sont libres de pivoter, l'une par rapport à l'autre, en rotation autour de l'axe d'articulation (19), tant que l'attelage avant de ce véhicule est attelé,
ce mécanisme comportant à cet effet un vérin (80) interposé entre les parties avant (10) et arrière (12), ce vérin comportant un cylindre (90) et un piston (92) monté coulissant à l'intérieur du cylindre le long d'un axe longitudinal, ce piston divisant le cylindre en une chambre avant (102) et une chambre arrière (104) chacune remplie d'un fluide d'actionnement,
**caractérisé en ce que** le mécanisme (50 ; 210) commandable de verrouillage comporte un distributeur bistable (120 ; 212) déplaçable, en réponse à une commande, entre :
- un premier état stable (122) dans lequel il interdit la circulation du fluide d'actionnement pour obtenir la position verrouillée du mécanisme de verrouillage, et
- un second état stable (124) dans lequel il autorise l'admission dans et, en alternance, le refoulement du fluide d'actionnement dans les chambres avant (102) et arrière (104) du vérin (80) pour obtenir la position déverrouillée du mécanisme de déverrouillage,
les premier et second états stables (122, 124) étant aptes à être maintenus sans consommation d'énergie.

2. Véhicule selon la revendication 1, dans lequel :
- la section transversale, perpendiculaire à l'axe longitudinal du vérin, de la chambre arrière (104), est plus petite que la section transversale de la chambre avant (102),
- le mécanisme commandable de verrouillage comporte un réservoir (140) de fluide d'actionnement et un premier tuyau (114) qui raccorde fluidiquement les chambres avant et arrière sans passer par l'intermédiaire du distributeur bistable,
- le distributeur bistable comporte :
• une première entrée (126) fluidiquement raccordée en permanence à la chambre avant,
• une première sortie (128) fluidiquement isolée du réservoir,
• une deuxième sortie (130) fluidiquement raccordée en permanence au réservoir, et
• dans le premier état stable, la première entrée (126) est fluidiquement isolée de la deuxième sortie (130) pour bloquer la circulation du fluide d'actionnement de la chambre avant vers la chambre arrière, et
• dans le second état stable, la première entrée (126) est fluidiquement raccordée à la deuxième sortie (130) pour autoriser la circulation du fluide d'actionnement de la chambre avant vers la chambre arrière.

3. Véhicule selon la revendication 2, dans lequel :
- le premier tuyau (114) est équipé d'un premier clapet anti-retour (116) qui autorise la circulation du fluide d'actionnement uniquement de la chambre avant vers la chambre arrière, et
- la première entrée (126) du distributeur bistable est également fluidiquement raccordée en permanence à la chambre arrière sans passer par l'intermédiaire du premier clapet anti-retour.

4. Véhicule selon la revendication 3, dans lequel :
- le mécanisme commandable de verrouillage comporte une soupape (144) de décharge fluidiquement raccordée en permanence à la première sortie (128), cette soupape de décharge autorisant la circulation du fluide d'actionnement vers le réservoir (140) uniquement si la pression du fluide d'actionnement dépasse un seuil prédéterminé correspondant à une pression au-delà de laquelle le mécanisme de verrouillage risque d'être endommagé, et
- dans le premier état stable (122), la première entrée (126) du distributeur est en permanence raccordé fluidiquement à la première sortie (130).

5. Véhicule selon la revendication 2, dans lequel le mécanisme commandable de verrouillage comporte un deuxième tuyau (146) raccordant fluidiquement en permanence la deuxième sortie (130) du distributeur bistable au réservoir, ce deuxième tuyau étant équipé d'un réducteur (148) commandable de débit apte à faire varier la section hydraulique minimale du deuxième tuyau disponible pour le passage du fluide d'actionnement qui circule à l'intérieur de ce deuxième tuyau.

6. Véhicule selon l'une quelconque des revendications 2 à 5, dans lequel le distributeur bistable (212) comporte :
- une deuxième entrée (214) fluidiquement raccordée en permanence à la chambre avant,
- une troisième sortie (216) fluidiquement raccordée en permanence au réservoir, et
- dans le premier état stable, la deuxième entrée (214) est fluidiquement isolée de la la deuxième (130) et de la troisième (216) sorties pour bloquer la circulation du fluide d'actionnement de la chambre avant vers le réservoir, et
- dans le second état stable, la deuxième entrée (214) est fluidiquement raccordée à la troisième sortie (216) pour autoriser la circulation du fluide d'actionnement du réservoir vers la chambre avant.

7. Véhicule selon l'une quelconque des revendications 1 à 5, dans lequel le mécanisme de verrouillage comporte un troisième tuyau (150) raccordant fluidiquement la chambre avant (102) au réservoir (140), ce troisième tuyau étant équipé d'un second clapet anti-retour (152) qui autorise uniquement la circulation du fluide d'actionnement du réservoir vers la chambre avant.

8. Véhicule selon l'une quelconque des revendications précédentes, dans lequel l'axe d'articulation (19) est positionné à égale distance des axes transversaux (34, 44) des trains de roues avant (16) et arrière (18) du véhicule, l'axe transversal d'un train de roues étant défini comme étant :
- l'axe passant par le centre géométrique de la surface de contact entre la route et les roues du train de roues lorsque ce train comporte plus d'une roue et que ces roues ne sont pas braquées, et
- l'axe parallèle à l'axe de roulement d'une roue et passant par le centre géométrique de la surface de contact entre la route et cette roue, si le train de roues comporte uniquement cette roue et que cette roue n'est pas braquée.

9. Véhicule selon l'une quelconque des revendications précédentes, dans lequel l'articulation (14) comporte une liaison pivot (15) selon l'axe d'articulation (19).

10. Véhicule selon l'une quelconque des revendications précédentes, dans lequel le véhicule comporte seulement un trains avant (16) et un train arrière (18) de roues.

## Patentansprüche

1. Koppelbares Straßenkraftfahrzeug (4; 6; 8), welches umfasst:
- wenigstens drei Räder (30, 32, 40, 42), die geeignet sind, das Kraftfahrzeug auf einer ebenen Straße fahren zu lassen, und auf zwei Fahrwerke, ein vorderes (16) und ein hinteres (18), verteilt sind;
- ein Fahrgestell, welches aufweist:
• einen vorderen Teil (10), an welchem das vordere Fahrwerk befestigt ist;
• einen hinteren Teil (12), an welchem das hintere Fahrwerk befestigt ist;
• ein Gelenk (14), das zwischen dem vorderen und dem hinteren Teil des Fahrgestells angeordnet ist, wobei dieses Gelenk dem vorderen Teil ermöglicht, in Bezug auf den hinteren Teil um eine zur Fahrebene des Fahrzeugs senkrechte Gelenkachse (19) zu schwenken, um einen Gelenkwinkel (θ) des Fahrzeugs zu ändern, wobei diese Fahrebene als die Ebene definiert ist, die durch die Kontaktflächen zwischen der Straße und den Rädern des Fahrzeugs verläuft,
- eine vordere (70) und eine hintere (72) Kupplung, die sich vorn bzw. hinten am Kraftfahrzeug befinden,
• wobei die vordere Kupplung (70) abwechselnd verlagerbar ist zwischen:
- einer angekuppelten Position, in welcher diese vordere Kupplung mit einer hinteren Kupplung zusammenwirkt, die mit der hinteren Kupplung (72) dieses Fahrzeugs identisch ist und sich an einem anderen Fahrzeug befindet, um diese Fahrzeuge mechanisch, ohne Gierfreiheitsgrad, aneinander anzuhängen und den vorderen Teil dieses Fahrzeugs mit dem hinteren Teil des anderen Fahrzeugs fluchtend auszurichten, und
- einer abgekuppelten Position, in welcher diese Fahrzeuge voneinander gelöst sind:
• wobei die hintere Kupplung (72) abwechselnd verlagerbar ist zwischen:
- einer angekuppelten Position, in welcher diese hintere Kupplung mit einer vorderen Kupplung zusammenwirkt, die mit der vorderen Kupplung (70) dieses Fahrzeugs identisch ist und sich an einem anderen Fahrzeug befindet, um diese Fahrzeuge mechanisch, ohne Gierfreiheitsgrad, aneinander anzuhängen und den hinteren Teil dieses Fahrzeugs mit dem vorderen Teil des anderen Fahrzeugs fluchtend auszurichten, und
- einer abgekuppelten Position, in welcher diese Fahrzeuge voneinander gelöst sind:
- eine Lenkvorrichtung (35), die geeignet ist, in Reaktion auf einen Befehl eines Fahrers des Fahrzeugs den Einschlagwinkel jedes Rades des vorderen Fahrwerks zu ändern, wobei diese Lenkvorrichtung von dem Gelenk (14) unabhängig ist,
- einen steuerbaren Verriegelungsmechanismus (50; 210), der geeignet ist, abwechselnd umzuschalten zwischen:
• einer verriegelten Position, in welcher er das Gelenk in einer Position verriegelt, in welcher der vordere und der hintere Teil des Fahrgestells miteinander fluchten, solange die vordere Kupplung dieses Fahrzeugs abgekuppelt ist, und
• einer entriegelten Position, in welcher der vordere und der hintere Teil relativ zueinander frei um die Gelenkachse (19) schwenken können, solange die vordere Kupplung dieses Fahrzeugs angekuppelt ist,
wobei dieser Mechanismus zu diesem Zweck einen Stellantrieb (80) aufweist, der zwischen dem vorderen (10) und dem hinteren (12) Teil angeordnet ist, wobei dieser Stellantrieb einen Zylinder (90) und einen Kolben (92), der im Inneren des Zylinders entlang einer Längsachse gleitend angeordnet ist, aufweist, wobei dieser Kolben den Zylinder in eine vordere Kammer (102) und eine hintere Kammer (104) aufteilt, die jeweils mit einem Betätigungsfluid gefüllt sind,
**dadurch gekennzeichnet, dass** der steuerbare Verriegelungsmechanismus (50; 210) einen bistabilen Verteiler (120; 212) aufweist, der in Reaktion auf einen Befehl bewegbar ist zwischen:
- einem ersten stabilen Zustand (122), in welchem er die Strömung des Betätigungsfluids verhindert, um die verriegelte Position des Verriegelungsmechanismus erhalten, und
- einem zweiten stabilen Zustand (124), in welchem er wechselweise den Einlass und das Zurückströmen des Betätigungsfluids in die vordere (102) und die hintere (104) Kammer des Stellantriebs (80) ermöglicht, um die entriegelte Position des Verriegelungsmechanismus erhalten,
wobei der erste und der zweite stabile Zustand (122, 124) ohne Energieverbrauch aufrechterhaltbar sind.

2. Fahrzeug nach Anspruch 1, wobei:
- der zur Längsachse des Stellantriebs senkrechte Querschnitt der hinteren Kammer (104) kleiner als der Querschnitt der vorderen Kammer (102) ist,
- der steuerbare Verriegelungsmechanismus einen Behälter (140) für Betätigungsfluid und ein erstes Rohr (114) aufweist, welches die vordere und die hintere Kammer fluidisch verbindet, ohne über den bistabilen Verteiler zu verlaufen,
- wobei der bistabile Verteiler aufweist:
» einen ersten Einlass (126), der an die vordere Kammer dauerhaft fluidisch angeschlossen ist,
• einen ersten Auslass (128), der von dem Behälter fluidisch getrennt ist,
• einen zweiten Auslass (130), der an den Behälter dauerhaft fluidisch angeschlossen ist, und
• wobei im ersten stabilen Zustand der erste Einlass (126) vom zweiten Auslass (130) fluidisch getrennt ist, um die Strömung des Betätigungsfluids von der vorderen Kammer zur hinteren Kammer zu blockieren, und
• wobei im zweiten stabilen Zustand der erste Einlass (126) an den zweiten Auslass (130) fluidisch angeschlossen ist, um die Strömung des Betätigungsfluids von der vorderen Kammer zur hinteren Kammer zu erlauben.

3. Fahrzeug nach Anspruch 2, wobei:
- das erste Rohr (114) mit einem ersten Rückschlagventil (116) ausgestattet ist, welches die Strömung des Betätigungsfluids ausschließlich von der vorderen Kammer zur hinteren Kammer erlaubt, und
- der erste Einlass (126) des bistabilen Verteilers auch an die hintere Kammer dauerhaft fluidisch angeschlossen ist, ohne über das erste Rückschlagventil zu verlaufen.

4. Fahrzeug nach Anspruch 3, wobei:
- der steuerbare Verriegelungsmechanismus ein Entlastungsventil (144) aufweist, das an den ersten Auslass (128) dauerhaft fluidisch angeschlossen ist, wobei dieses Entlastungsventil die Strömung des Betätigungsfluids zum Behälter (140) ausschließlich dann erlaubt, wenn der Druck des Betätigungsfluids einen vorbestimmten Schwellenwert überschreitet, der einem Druck entspricht, bei dessen Überschreitung die Gefahr einer Beschädigung des Verriegelungsmechanismus besteht, und
- im ersten stabilen Zustand (122) der erste Einlass (126) des Verteilers an der ersten Auslass (130) dauerhaft fluidisch angeschlossen ist.

5. Fahrzeug nach Anspruch 2, wobei der steuerbare Verriegelungsmechanismus ein zweites Rohr (146) aufweist, das den zweiten Auslass (130) des bistabilen Verteilers an den Behälter dauerhaft fluidisch anschließt, wobei dieses zweite Rohr mit einem steuerbaren Durchflussbegrenzer (148) ausgestattet ist, der geeignet ist, ein Variieren des minimalen hydraulischen Querschnitts des zweiten Rohres zu bewirken, der für den Durchfluss des Betätigungsfluids, welches im Inneren dieses zweiten Rohres strömt, verfügbar ist.

6. Fahrzeug nach einem der Ansprüche 2 bis 5, wobei der bistabile Verteiler (212) aufweist:
- einen zweiten Einlass (214), der an die vordere Kammer dauerhaft fluidisch angeschlossen ist,
- einen dritten Auslass (216), der an den Behälter dauerhaft fluidisch angeschlossen ist, und
- wobei im ersten stabilen Zustand der zweite Einlass (214) vom zweiten (130) und vom dritten (216) Auslass fluidisch getrennt ist, um die Strömung des Betätigungsfluids von der vorderen Kammer zum Behälter zu blockieren, und
- wobei im zweiten stabilen Zustand der zweite Einlass (214) an den dritten Auslass (216) fluidisch angeschlossen ist, um die Strömung des Betätigungsfluids vom Behälter zur vorderen Kammer zu erlauben.

7. Fahrzeug nach einem der Ansprüche 1 bis 5, wobei der Verriegelungsmechanismus ein drittes Rohr (150) aufweist, das die vordere Kammer (102) an den Behälter (140) fluidisch anschließt, wobei dieses dritte Rohr mit einem zweiten Rückschlagventil (152) ausgestattet ist, welches ausschließlich die Strömung des Betätigungsfluids vom Behälter zur vorderen Kammer erlaubt.

8. Fahrzeug nach einem der vorhergehenden Ansprüche, wobei die Gelenkachse (19) in gleichem Abstand von den Querachsen (34, 44) des vorderen (16) und des hinteren (18) Fahrwerks des Fahrzeugs positioniert ist, wobei die Querachse eines Fahrzeugs definiert ist als:
- die Achse, die durch den geometrischen Mittelpunkt der Kontaktfläche zwischen der Fahrbahn und den Rädern des Fahrwerks verläuft, wenn dieses Fahrwerk mehr als ein Rad aufweist und wenn diese Räder nicht eingeschlagen sind, und
- die Achse, die zur Laufachse eines Rades parallel ist und durch den geometrischen Mittelpunkt der Kontaktfläche zwischen der Fahrbahn und diesem Rad verläuft, wenn das Fahrwerk nur dieses Rad aufweist und wenn dieses Rad nicht eingeschlagen ist.

9. Fahrzeug nach einem der vorhergehenden Ansprüche, wobei das Gelenk (14) eine Drehzapfenverbindung (15) entlang der Gelenkachse (19) aufweist.

10. Fahrzeug nach einem der vorhergehenden Ansprüche, wobei das Fahrzeug nur ein vorderes Fahrwerk (16) und ein hinteres Fahrwerk (18) aufweist.

## Claims

1. Couplable automotive road vehicle (4; 6; 8), comprising:
- at least three wheels (30, 32, 40, 42) capable of allowing the automotive vehicle to roll on a flat road and distributed between two wheel axles, a front wheel axle (16) and a rear wheel axle (18);
- a chassis, comprising:
» a front portion (10) to which the front axle is fastened;
• a rear portion (12) to which the rear axle is fastened;
• an articulation (14) interposed between the front and rear portions of the chassis, this articulation allowing the front portion to pivot, with respect to the rear portion, about an articulation axis (19) normal to a rolling plane of the vehicle so as to modify an articulation angle (θ) of the vehicle, this rolling plane being defined as the plane passing through the areas of contact between the road and the wheels of the vehicle,
- front (70) and rear (72) hitches respectively situated at the front and at the rear of the automotive vehicle,
• the front hitch (70) being movable, alternately, between:
- a coupled position, in which this front hitch cooperates with a rear hitch, which is identical to the rear hitch (72) of this vehicle and situated on another vehicle, in order to mechanically attach these vehicles to one another without a degree of freedom in rotation in yaw and to align the front portion of this vehicle with the rear portion of the other vehicle, and
- an uncoupled position, in which these vehicles are detached from one another;
• the rear hitch (72) being movable, alternately, between:
- a coupled position, in which this rear hitch cooperates with a front hitch, which is identical to the front hitch (70) of this vehicle and situated on another vehicle, in order to mechanically attach these vehicles to one another without a degree of freedom in rotation in yaw and to align the rear portion of this vehicle with the front portion of the other vehicle, and
- an uncoupled position, in which these vehicles are detached from one another;
- a steering device (35), capable of modifying, in response to a command of a driver of the vehicle, the steering angle of each wheel of the front axle, this steering device being independent of the articulation (14),
- a controllable locking mechanism (50; 210) capable of switching, alternately, between:
• a locked position, in which it locks the articulation in a position in which the front and rear portions of the chassis of the vehicle are aligned with respect to one another as long as the front hitch of this vehicle is uncoupled, and
• an unlocked position, in which the front and rear portions are free to pivot with respect to one another in rotation about the articulation axis (19) as long as the front hitch of this vehicle is coupled,
this mechanism for this purpose comprising a jack (80) interposed between the front (10) and rear (12) portions, this jack comprising a cylinder (90) and a piston (92) mounted such that it can slide within the cylinder along a longitudinal axis, this piston dividing the cylinder into a front chamber (102) and a rear chamber (104), each filled with an actuating fluid,
**characterized in that** the controllable locking mechanism (50; 210) comprises a bistable directional-control valve (120; 212) which can move, in response to a command, between:
- a first stable state (122) in which it prevents the circulation of the actuating fluid in order to obtain the locked position of the locking mechanism, and
- a second stable state (124) in which it allows the actuating fluid to be let into and, alternately, discharged from the front (102) and rear (104) chambers of the jack (80) in order to obtain the unlocked position of the unlocking mechanism,
the first and second stable states (122, 124) being capable of being maintained without energy consumption.

2. Vehicle according to Claim 1, in which:
- the cross section, perpendicular to the longitudinal axis of the jack, of the rear chamber (104) is smaller than the cross section of the front chamber (102),
- the controllable locking mechanism comprises an actuating fluid reservoir (140) and a first pipe (114) which fluidically connects the front and rear chambers without passing via the bistable directional-control valve,
- the bistable directional-control valve comprises:
• a first inlet (126) permanently fluidically connected to the front chamber,
• a first outlet (128) fluidically isolated from the reservoir,
• a second outlet (130) permanently fluidically connected to the reservoir, and
• in the first stable state, the first inlet (126) is fluidically isolated from the second outlet (130) in order to block the circulation of the actuating fluid from the front chamber to the rear chamber, and
• in the second stable state, the first inlet (126) is fluidically connected to the second outlet (130) in order to allow the circulation of the actuating fluid from the front chamber to the rear chamber.

3. Vehicle according to Claim 2, in which:
- the first pipe (114) is equipped with a first non-return valve (116) which allows the circulation of the actuating fluid only from the front chamber to the rear chamber, and
- the first inlet (126) of the bistable directional-control valve is also permanently fluidically connected to the rear chamber without passing via the first non-return valve.

4. Vehicle according to Claim 3, in which:
- the controllable locking mechanism comprises a discharge valve (144) permanently fluidically connected to the first outlet (128), this discharge valve allowing the circulation of the actuating fluid towards the reservoir (140) only if the pressure of the actuating fluid exceeds a predetermined threshold corresponding to a pressure beyond which the locking mechanism risks being damaged, and
- in the first stable state (122), the first inlet (126) of the directional-control valve is permanently fluidically connected to the first outlet (130).

5. Vehicle according to Claim 2, in which the controllable locking mechanism comprises a second pipe (146) permanently fluidically connecting the second outlet (130) of the bistable directional-control valve to the reservoir, this second pipe being equipped with a controllable flow rate reducer (148) capable of varying the minimum hydraulic cross section of the second pipe available for the passage of the actuating fluid which circulates inside this second pipe.

6. Vehicle according to any one of Claims 2 to 5, in which the bistable directional-control valve (212) comprises:
- a second inlet (214) permanently fluidically connected to the front chamber,
- a third outlet (216) permanently fluidically connected to the reservoir, and
- in the first stable state, the second inlet (214) is fluidically isolated from the second (130) and third (216) outlets in order to block the circulation of the actuating fluid from the front chamber to the reservoir, and
- in the second stable state, the second inlet (214) is fluidically connected to the third outlet (216) in order to allow the circulation of the actuating fluid from the reservoir to the front chamber.

7. Vehicle according to any one of Claims 1 to 5, in which the locking mechanism comprises a third pipe (150) fluidically connecting the front chamber (102) to the reservoir (140), this third pipe being equipped with a second non-return valve (152) which only allows the circulation of the actuating fluid from the reservoir to the front chamber.

8. Vehicle according to any one of the preceding claims, in which the articulation axis (19) is positioned at an equal distance from the transverse axes (34, 44) of the front (16) and rear (18) wheel axles of the vehicle, the transverse axis of a wheel axle being defined as being:
- the axis passing through the geometric centre of the area of contact between the road and the wheels of a wheel axle when this axle comprises more than one wheel and when these wheels are not steered, and
- the axis parallel to the rolling axis of a wheel and passing through the geometric centre of the area of contact between the road and this wheel if the wheel axle comprises only this wheel and when this wheel is not steered.

9. Vehicle according to any one of the preceding claims, in which the articulation (14) comprises a pivot connection (15) about the articulation axis (19).

10. Vehicle according to any one of the preceding claims, in which the vehicle comprises only a front wheel axle (16) and a rear wheel axle (18).
